# EUROPEAN PATENT APPLICATION

(11) **EP 1 319 817 A1**
(43) Date of publication of application: **18.06.2003**
(21) Application number: 02102696.8
(22) Date of filing: 06.12.2002
(51) Int. Cl.: F02D 9/10, F16K 1/22

(54) **Flap valve for a fluid flow passage**

(30) Priority: 17.12.2001 GB 0130086
(71) Applicant: Delphi Technologies, Inc., Troy, MI 48007 (US)
(72) Inventor: Marx, Patrice, 54400, Cosnes et Romain (FR); Thevenin, Marc, 6810, Prouvy (BE); Bellec, Joel, 57970, Illange (FR)
(74) Representative: Beissel, Jean

(57) **Abstract**

A flap valve (10) for a fluid flow passage (12) is presented. The flap valve (10) is adapted to be mounted on a rotating spindle (20) in a fluid flow passage (12) for rotating therein in order to control the flow of fluid. The flap valve (10) has a front side (16), which, in use, faces upstream. A deflecting surface (30) protrudes on the front side (16) on a part (28) of the flap valve (10), which, in use, moves toward the downstream side of the fluid flow passage 12.

## Description

### FIELD OF THE INVENTION

The present invention generally relates to a flap valve for a fluid flow passage.

### BACKGROUND OF THE INVENTION

It is known to provide a flap valve for controlling the flow rate of fluid through a passage. One example is for controlling the rate of flow of air, or a mixture of air and fuel, to the cylinders of an internal combustion engine. The flap valve generally is a disk-shaped element, which is mounted on a spindle. The spindle is rotatable about its longitudinal axis. Rotation of the spindle moves the flap valve between a position in which the passage is closed and a position in which the passage is substantially open.

In modern engines, the flap valve is actuated by a driving motor coupled to the spindle. The engine control unit calculates how far the throttle needs to open and actuates the motor accordingly. An angle sensor is typically associated with the flap valve to monitor the exact compliance with the desired position.

It is to be noted that the flow of air in the passage generates some forces on the flap valve. Indeed, when the valve is partially open in the passage, a torque is created on the flap valve -due to the pressure drop along the pas-sage- that tends to bring the flap valve back into the closed position. It is thus necessary that the driving motor be capable of withstanding this torque so as to maintain the flap valve in the desired position, and to overcome this torque to further open the flap valve. Depending on the intake line and flap valve configurations, this closing torque may become relatively important, thereby affecting the flap valve controllability, requiring more powerful driving motors and thus increasing the electrical power requirements for operating the motor.

### OBJECT OF THE INVENTION

The object of the present invention is to provide a flap valve having an improved controllability and allowing energy savings. This object is achieved by a flap valve as claimed in claim 1.

### SUMMARY OF THE INVENTION

In order to overcome the above-mentioned disadvantages, the present invention provides a flap valve for controlling the flow of fluid in a passage. The flap valve is adapted to be mounted on a rotating spindle in a fluid flow passage and has a front side, which, in use, faces upstream. According to an important aspect of the invention, the flap valve is provided with a deflecting surface protruding on the front side of the flap valve, on a part thereof, which, in use, moves toward the downstream side of the fluid flow passage.

Due to this deflecting surface, the flow of fluid on the flap valve, when in a partially open position, generates a greater torque on the downstream portion of the flap valve than with a conventional flat flap valve, which acts against the torque produced by the fluid flow on the upstream part of the flap valve that tends to close the latter. The deflecting surface thus allows to reduce the closing torque, which means that the torque required from the driving motor to actuate the flap valve is reduced, thereby improving the flap valve controllability. This also means that a less powerful motor is required to actuate the flap valve, thereby saving energy and reducing manufacturing costs. The deflecting surface is advantageously dimensioned so as to counterbalance, in a partially open position of said flap valve, the torque exerted by the fluid flow on the upstream moving part of the flap valve.

To provide an increased effect of the deflecting surface, the latter is advantageously formed on a peripheral portion of the flap valve.

In a preferred embodiment, the deflecting surface is a bent edge portion of the flap valve. This forms an upturned lip at the periphery of the flap valve, which is integral with the flap valve and easy to manufacture. Advantageously, the bent edge portion is formed on the edge portion most remote from the rotation axis of the flap valve. This provides a maximum torque on the flap valve.

In order to minimise the flow restriction of the flap valve in the fully open position, the flap valve should preferably have a wave-form profile lying within the shadow of the spindle. This means that the shape of the flap valve should be such that the overall thickness of the flap valve approximately corresponds to the thickness of the spindle on which it is to be mounted. In addition, the flap-vale should preferably have a smoothly curved profile, so as to prevent the generation of turbulences downstream of the flap valve.

If the flap valve is to be mounted in a cylindrical passage, it is then preferably designed in such a way as to substantially close this cylindrical passage when placed therein at predetermined angle with regard to the longitudinal axis of the passage. The predetermined angle is preferably in the range of 60 to 90°.

The flap valve according to the present invention can be used in a variety of applications where a flow of fluid is to be controlled in a fluid flow passage. It is especially adapted to be used as a throttle-valve in an internal combustion engine.

Depending on the applications, the present flap valve can be made of steel or polymeric material. A variety of manufacturing methods are available among which machining and punching are preferred when using steel, and injection moulding when using polymeric material.

It remains to be noted that, although the deflecting surface of the present flap valve is preferably formed by deforming an edge portion of the flap valve, there are other ways of providing a protruding deflecting surface on the front side of the flap valve. For example, in case the flap valve is manufactured by moulding, it is possible to add matter on a selected area of the front side to provide such a protruding deflecting surface.

According to another aspect of the invention, a method for manufacturing a flap valve comprises the following steps:
providing a metal sheet having a convex profile and ending with an upwardly bent part;
providing a punching tool comprising a cylindrical portion with a bevelled end forming a cutting edge; and
urging the punching tool onto the metal sheet from its convex side for taking out a flap valve therefrom;
wherein the zone of impact of the punching tool onto the metal sheet is selected in such a way that the flap valve has a generally wave-shaped profile with an upwardly bent edge portion.

The present method is especially adapted for manufacturing a metallic wave-shaped flap valve having an upturned edge portion forming a deflecting surface. It is to be noted that the initial curved profile of the metal sheet prevents sliding of the latter during punching, which is a recurring problem when working with flat metal sheets. Furthermore, the manufacture of the flap valve by punching is advantageous in that it allows to control the inclination of the edges of the flap valve and is well adapted for mass production.

According to a further aspect of the invention, a throttle device for an intake line of an internal combustion engine comprises:
a cylindrical passage for intake air or an air/fuel mixture;
a rotating spindle in the cylindrical passage;
a driving motor coupled to the rotating sindle; and
a flap valve in accordance with the invention mounted on the pivoting spindle in the passage for rotating therein in order to control the flow rate of intake air or air/fuel mixture.

Such a device has an improved controllability, which is due to the use of the counterbalanced flap valve according to the invention. The throttle device will generally also include a driving motor and a position sensor associated with the flap valve. Since the control of the present flap valve requires a less powerful driving motor than conventional ones, the present throttle device can be of smaller dimensions than conventional throttle devices.

### BRIEF DESCRIPTION OF THE DRAWINGS

The present invention will now be described, by way of example, with reference to the accompanying drawings, in which:
FIG.1: is a cross-sectional view of a preferred embodiment of a flap valve of the present invention mounted on a rotatable spindle and positioned in a passage through which air can flow;
FIG.2: is a top view of the flap valve of Fig.1;
FIG.3: is a perspective view of the flap valve of Fig.1, from the side with the upturned edge portion;
FIG.4: is view of the front side of the flap valve of Fig.1.

### DETAILED DESCRIPTION OF A PREFERRED EMBODIMENT

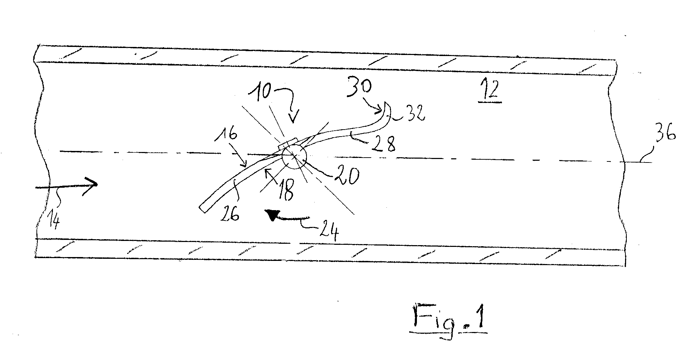

Figs.1 through 4 show different views of a preferred embodiment of a flap valve 10 in accordance with the present invention. In Fig.1, the flap valve 10 is used as a throttle valve installed in a cylindrical passage 12 of an intake line of an internal combustion engine to control the flow rate of air therethrough. The direction of flow of air is indicated by arrow 14. The flap valve 10 has a front side 16, facing upstream of the passage 12, and an opposite downstream facing side 18.

Reference sign 20 indicates a spindle rotatable about its longitudinal axis and which traverses the passage 12. The flap valve 10 is attached to the rotatable spindle 20 so as to rotate therewith. The flap valve 10 is therefore provided with two bores, through which screws 22 are engaged. An electric motor (not shown) is coupled to the spindle 20 for actuating the latter. This allows moving the flap valve 10 between a position in which the passage is substantially closed and a desired (fully or partially) open position. In the configuration of Fig.1, the opening direction is indicated by arrow 24.

The rotatable spindle 20 divides the flap valve 10 into two parts 26 and 28. In use, when the flap valve 10 is rotated in the opening direction, part 28 moves toward the downstream side of the passage 12 and part 26 moves toward the upstream side.

It will be appreciated that the flap valve 10 is provided with a deflecting surface 30 on the front side 16 of part 28, i.e. the part which moves toward the downstream side of passage 12. This deflecting surface 30 is formed by a bent outer edge portion 32 of the flap valve 10.

The bent edge portion 32 forms an upturned lip that acts as a deflector, so that the flow of air thereon creates a torque, which forces the flap valve 10 into the opening direction 24. This torque acts against the torque generated by the air flow on part 26 of the flap valve 10, which tends to bring the flap valve 10 back into the closed position.

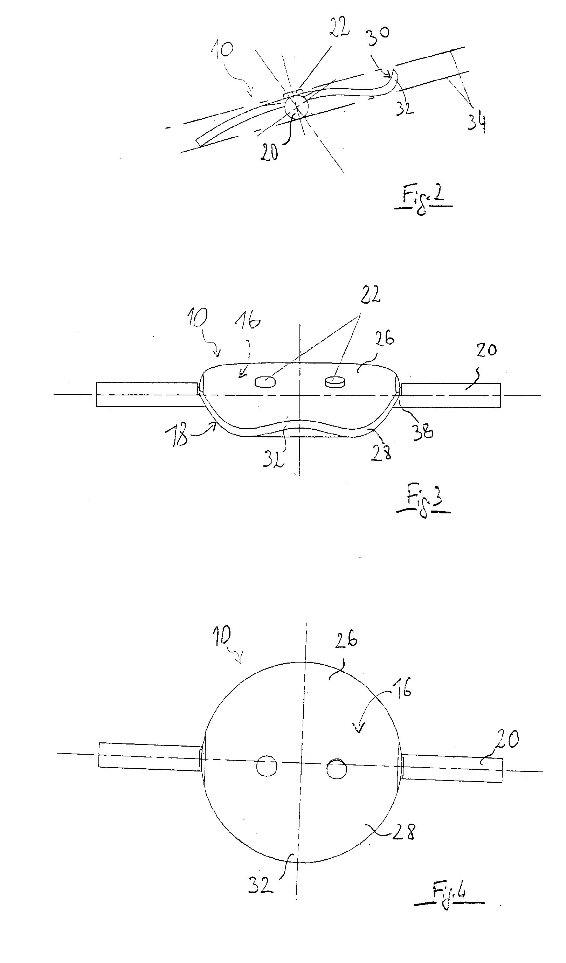

As can be better seen in Fig.3, the bent edge portion 32 is preferably situated at the most remote position from the axis of rotation, such that a maximum torque is obtained.

It is to be noted that the flap valve 10 advantageously has a smoothly curved, wave-shaped profile. In fact, the flap valve has a generally convex curvature, and the presence of the upturned edge portion results in this wave-shaped profile. As can be seen in Fig.2, the flap valve profile lies within the shadow of the spindle 20, which means that the overall thickness of the flap valve is not more than the diameter of the spindle 20. This is illustrated in Fig.2, wherein the flap valve 10 is comprised between two parallel tangents 34 to the rotating spindle 20. This permits to reduce to a minimum the restriction of flow of the flap valve 10 in the fully open position (essentially aligned with the longitudinal axis 36 of the passage 12). Therefore, the spindle 20 also has a central part 38 with a reduced thickness, in which the flap valve 10 is received.

Furthermore, the smoothly curved configuration of the flap valve 10 avoids the generation of turbulences downstream of the flap valve 10.

Conventionally, a throttle-valve is designed in such a way that in the closed position, it lies at a predetermined angle with the longitudinal axis of the passage. Similarly, the present flap valve 10 is designed so as to substantially close the passage 12 in a position lying at a predetermined angle with the longitudinal axis 36 of the passage 12. Hence, when the flap valve 10 is in a certain angular position as shown in Fig.4, it allows to obturate the cylindrical passage 12. This angle is preferably between 60 and 90°.

The flap valve is preferably made of metal such as steel, but could also be made of a rigid polymer. Steel is however preferred for use as throttle valve as for its wear resistance.

The present flap valve 10 is preferably manufactured by punching from a metal sheet having a convex profile and ending on one side with an upwardly bent part. A punching tool comprising a cylindrical portion with a bevelled end forming the cutting edge is used. The punching tool is impinged onto the metal sheet at incidence angle corresponding to the bevelled angle of the cutting tool to take out the flap valve from the metal sheet. During punching, the metal sheet is advantageously supported on a working surface having a matching surface profile. The zone of impact of the punching tool is selected in such a way that the flap valve has a generally wave-shaped profile with an upwardly bent edge portion.

## Claims

1. A flap valve for a fluid flow passage, said flap valve (10) being adapted to be mounted on a rotating spindle (20) in a fluid flow passage (12) for rotating therein in order to control the flow of fluid, said flap valve (10) having a front side (16), which, in use, faces upstream, **characterised by** a deflecting surface (30) protruding on said front side (16) on a part (28) of said flap valve (10), which, in use, moves toward the downstream side of said fluid flow passage.

2. The flap valve according to claim 1, **characterised in that** said deflecting surface (30) is formed on a peripheral portion of said flap valve (10).

3. The flap valve according to claim 1 or 2, **characterised in that** said deflecting surface (30) is an upwardly bent edge portion (32) of said flap valve (10).

4. The flap valve according to claim 3, **characterised in that** said bent edge portion (32) is formed on an edge portion most remote from the rotation axis of said flap valve (10).

5. The flap valve according to any one of the preceding claims, **characterised in that** said deflecting surface (30) is dimensioned so as to counterbalance, in a partially open position of said flap valve (10), the torque exerted by the fluid flow on a part (26) of said flap valve (10) which, in use, moves toward the upstream side of said fluid flow passage (12).

6. The flap valve according to any one of the preceding claims, **characterised in that** it has a wave-form profile and has an overall thickness which corresponds to the thickness of the spindle (20) on which it is to be mounted.

7. The flap valve according to the preceding claim, **characterised in that** said flap valve (10) has a smoothly curved profile.

8. The flap valve according to any one of the preceding claims, **characterised in that** said flap valve (10) is designed in such a way as to substantially close a cylindrical passage (12) when placed therein at predetermined angle with regard to the longitudinal axis (36) of said passage (12), said predetermined angle being preferably in the range of 60 to 90°.

9. Use of the flap valve according to any one of claims 1 to 8 as a throttle-valve.

10. A throttle device for an intake line of an internal combustion engine comprising:
a cylindrical passage for intake air or an air/fuel mixture;
a rotating spindle in said cylindrical passage;
a driving motor coupled to said rotating sindle; and
a flap valve as claimed in any one of claims 1 to 8 mounted on said pivoting spindle in said passage for pivoting therein in order to control the flow rate of said intake air or air/fuel mixture.

11. A method for manufacturing a flap valve comprising the following steps:
providing a metal sheet having a convex profile and ending with an upwardly bent part;
providing a punching tool comprising a cylindrical portion with a bevelled end forming a cutting edge; and
urging said punching tool onto said metal sheet for taking out a flap valve therefrom;
wherein the zone of impact of said punching tool onto said metal sheet is selected in such a way that said flap valve has a generally wave-shaped profile with an upwardly bent edge portion.
